# FASCICULE DE BREVET EUROPEEN

(11) **EP 0 616 164 B1**
(45) Date de publication et mention de la délivrance du brevet: **31.07.1996**
(21) Numéro de dépôt: 94400561.0
(22) Date de dépôt: 15.03.1994
(51) Int. Cl.: F16L 37/02, F16L 21/03, F16J 15/02

(54) **Joint d'étanchéité pour raccord à connexion instantanée à griffe ou à pince**
Abdichtungselement für eine Schnellkupplung mit Haken oder Spannzangen
Sealing element for a quick coupling provided with hooks or tongs

(30) Priorité: 19.03.1993 FR 9303197
(43) Date de publication de la demande: 21.09.1994
(73) Titulaire: LEGRIS S.A., F-35000 Rennes (FR)
(72) Inventeur: Combot-Courrau, Yves, F-35235 Thorigne Fouillard (FR); Le Saint, Benoît, F-35000 Rennes (FR); Musellec, Jean-Noel, F-35200 Rennes (FR); Le Quere, Philippe, F-35700 Rennes (FR)
(74) Mandataire: Robert, Jean-Pierre

(56) Documents cités:
- FR-A- 2 094 278
- US-A- 3 366 392
- US-A- 4 052 112
- US-A- 4 190 259

## Description

L'invention concerne un dispositif adapté à réaliser dans un raccord à connexion instantanée l'étanchéité entre le corps de ce raccord et la surface extérieure du tube introduite dans ce corps.

On rappellera succinctement qu'un raccord à connexion instantanée comporte des moyens pour retenir l'extrémité de la tubulure dans un alésage destiné à accueillir cette extrémité. Ces moyens sont de deux grands types principaux : des griffes, c'est-à-dire des bras sensiblement parallèles à la surface extérieure du tube et régulièrement répartis autour de celui-ci, l'extrémité libre de ces bras étant pourvue d'une dent tournée vers la surface du tube tandis qu'à l'opposé de cette dent, le corps du raccord comporte une surface de came forçant la dent à pénétrer dans la surface extérieure du tube si ce dernier est sollicité dans le sens de son extraction ; le second type est constitué par une rondelle dont le bord intérieur est divisé en dents qui s'étendent sensiblement sur une surface conique et qui viennent mordre dans la surface du tube.

En plus de ces moyens de retenue, un raccord à connexion instantanée comporte au moins un joint d'étanchéité qui est situé au-delà de ses moyens d'accrochage dans le sens d'introduction du tube dans le corps du raccord. Dans la plupart des cas, ce moyen d'étanchéité est constitué par un joint torique s'étendant entre une portée cylindrique de l'alésage du corps et la surface extérieure du tube qui y est introduit.

Un joint torique présente de nombreux inconvénients. Tout d'abord lorsque l'on introduit le tube, l'extrémité de celui-ci à tendance à buter sur la surface extérieure du joint, à s'y ancrer et à le faire tourner sur lui-même, introduisant ainsi à l'intérieur du joint des contraintes locales des strictions et des déformations qui nuisent à la qualité de l'étanchéité obtenue et la longévité de ce joint. En outre, un tel joint est mal adapté à recevoir des tubes dont le diamètre extérieur est, pour des raisons de tolérances de fabrication, assez grandement variable autour d'un valeur nominale. Enfin, ces joints sont très sensibles à l'ovalisation du tube qui est logé dans le raccord et celle-ci est la source d'une fuite quasi-certaine.

Le but de la présente invention est de remédier aux inconvénients des joints toriques en proposant un dispositif d'étanchéité entre le corps d'un raccord de connexion instantanée et un tube mettant en oeuvre des moyens mieux adaptés à la réalisation de cette étanchéité qu'un simple joint torique.

Dans ce dispositif, l'un de ces moyens est le joint d'étanchéité lui-même qui est constitué par un corps annulaire de révolution limité par deux faces radiales parallèles, une surface cylindrique extérieure surmontée d'un bourrelet partiellement torique centré sur le plan médian du joint parallèle aux faces et une surface intérieure partiellement torique également centrée sur le plan médian et raccordée à chaque face radiale par une surface conique formant un chanfrein.

Cette forme est intéressante en ce qu'elle prend en considération le fait que le diamètre de la portée cylindrique ménagée dans le corps du raccord ainsi que les dimensions du joint sont, de fabrication, maîtrisées avec une précision bien plus importante que le diamètre extérieur du tube à loger dans le corps du raccord. Il suffit donc d'un léger serrage du joint dans le raccord pour que l'étanchéité soit parfaitement assurée ce léger serrage s'effectuant sur une petite surface qui est celle du bourrelet extérieur. En outre, la surface cylindrique qui borde ce bourrelet à l'extérieur du joint constitue un moyen pour empêcher ce joint pour rouler sur lui-même lors de l'introduction du tube.

Par ailleurs, le chanfrein que constitue chaque partie conique de la surface intérieure est un meilleur guide pour le tube que la partie torique de la surface intérieure d'un joint torique habituel.

De manière préférée, le rayon du bourrelet torique sera inférieur à celui de la surface torique intérieure.

Ainsi, on pourra prévoir pour un diamètre nominal donné un diamètre intérieur minimal du joint plus petit que celui d'un joint torique traditionnel, ce qui permettra d'être certain de prendre en compte les grandes variations d'un même diamètre extérieur nominal pour un tube, d'assurer donc quel que soit ce diamètre pour un diamètre nominal donné, un serrage efficace du joint sur le tube et donc de mieux absorber les ovalisations de ces tubes, voire de les contrer, sans pour autant que l'introduction du tube dans le joint soit plus difficile et/ou que celle-ci entraîne une déformation de celui-ci.

Un autre moyen de l'invention est constitué par un épaulement d'arrêt du joint dans le corps du raccord qui affecte une forme en coupelle conique pour autoriser un déplacement axial de la matière du joint lors de l'introduction du tube afin de faciliter cette introduction.

D'autres caractéristiques et avantages ressortiront de la description donnée ci-après à titre d'exemple d'un mode de réalisation de l'invention.

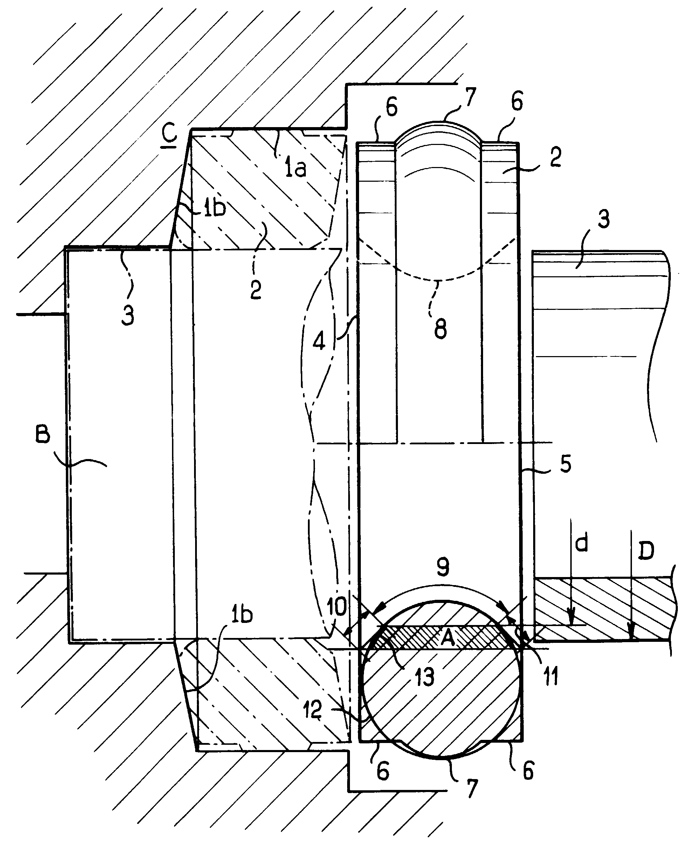

Il sera fait référence au dessin annexé qui par une figure unique illustre un joint conforme à l'invention.

Cette figure illustre schématiquement à grande échelle le corps C d'un raccord à connexion instantanée dont les griffes ou les pinces qui ne sont pas représentées seraient situées à droite. Ce corps C comporte un alésage B, étagé, présentant donc au moins une portée cylindrique 1a et au moins un épaulement 1b. La portée 1a est destinée à recevoir un joint 2 pour assurer l'étanchéité entre l'extrémité 3 d'un tube et le corps C, l'épaulement 1b formant une butée d'appui axial du joint 2 lors de sa mise en place dans le corps C.

Le joint 2 est un corps annulaire limité axialement par deux faces parallèles 4 et 5 et extérieurement par une surface cylindrique 6. Cette surface cylindrique est surmontée au centre, c'est-à-dire de manière équidistante des faces 4 et 5, d'un bourrelet 7 à surface extérieure torique. A titre indicatif le diamètre extérieur du bourrelet est d'environ 5 à 10 % supérieur au diamètre de la surface cylindrique 6. Lorsqu'on introduit le joint 2 dans la portée 1, seul le bourrelet est légèrement écrasé, la maîtrise des dimensions en fabrication tant du diamètre de la portée que du diamètre du bourrelet et de la surface cylindrique 6 étant telle que cet écrasement est suffisant pour assurer une bonne étanchéité au niveau de cette portée.

La surface intérieure 8 du joint d'étanchéité comporte une partie centrale torique 9 et deux parties coniques latérales 10 et 11 qui sont tangentes à cette partie centrale conique et qui forment un chanfrein pour l'introduction du tube 3. On notera à titre d'exemple que dans un mode de réalisation préféré le demi-angle au sommet du cône est de l'ordre de 42 à 43 degrés.

Sur cette figure on a représenté la section du joint 12 torique équivalent au joint selon l'invention. On comprend que la zone conique 10 et 11 permet l'introduction de tube pouvant avoir un diamètre extérieur plus important que ce qui serait permis par le joint torique car à cet endroit le joint torique présente une surface 13 beaucoup trop frontale par rapport à l'extrémité du tube. En d'autres termes, le joint torique 12 équivalent à celui de l'invention du point de vue de ses dimensions ne pourrait accepter dans les mêmes conditions que des tubes d'un diamètre d plus petit que le diamètre D du tube 3. On peut donc disposer pour un diamètre de tube donné d'une épaisseur de joint plus importante que pour un joint torique classique, l'excédant de matière étant marqué par la bande hachurée A. Le serrage du tube par le joint est donc plus important avec le dispositif de l'invention, il constitue donc une sorte de frette autour de ce tube qui contraint le tube et s'oppose à son ovalisation ou du moins l'encaisse de meilleure manière qu'un joint torique ordinaire.

Bien qu'il faille avec le joint selon l'invention comprimer plus de matière lors de l'introduction d'un tube qu'avec un joint torique comme montré ci-dessus, la présence des chanfreins d'introduction conservent la facilité de cette introduction. Par ailleurs si on prévoit de donner une forme conique à l'épaulement 1b on autorise un entraînement axial de la matière du joint lors de l'introduction du tube 3 et une déformation de celui-ci comme représenté en trait mixte sur la figure, ce qui améliore encore l'introduction du tube dans le corps C. En outre la présence des portions cylindriques 6 encadrant le bourrelet 7 limite lors de l'introduction ou son extraction, la torsion du joint sur lui-même en prenant appui sur la portée 1.

On notera enfin que le joint de l'invention est symétrique et que l'effort nécessaire pour le loger dans la portée 1 est plus faible que celui nécessaire à loger le joint torique dimensionnellement équivalent. Il en résulte une plus grande facilité de montage surtout de manière automatique.

## Revendications

1. Joint d'étanchéité constitué par un corps annulaire de révolution limité par deux faces radiales (4, 5) parallèles, une surface cylindrique (6) extérieure surmontée d'un bourrelet (7) partiellement torique centré sur le plan médian du joint parallèle aux faces (4, 5), une surface intérieure partiellement torique (9), également centrée sur le plan médian et raccordée à chaque face radiale par une surface conique (10, 11) formant chanfrein.

2. Joint d'étanchéité selon la revendication 1, caractérisé en ce que le rayon du bourrelet torique (7) est inférieur à celui de la surface torique intérieure (9).

3. Dispositif d'étanchéité pour un tube (3) logé dans l'alésage (B) d'un corps (C), notamment de raccord à connexion instantanée, cet alésage (B) comportant une portée cylindrique (1a) et un épaulement (1b) et le dispositif comprenant un joint d'étanchéité selon la revendication 1 ou la revendication 2 s'étendant entre le tube (3) et la portée cylindrique (1b) de l'alésage (B).

4. Dispositif selon la revendication 3, caractérisé en ce que l'épaulement (1b) de l'alésage forme une surface conique dont la pointe est tournée dans le sens d'introduction du tube dans l'alésage (B).

5. Dispositif selon la revendication 4, caractérisé en ce que l'angle au sommet de la surface conique (1b) est de l'ordre de 160°.

## Patentansprüche

1. Dichtungselement mit einem ringförmigen Rotationskörper, der von zwei parallelen radialen Flächen (4, 5) begrenzt ist, einer zylindrischen Außenfläche (6), die von einem teilweise torischen Wulst (7) überragt wird, der auf der zu den Flächen (4, 5) parallelen Mittelebene des Dichtungselementes zentriert ist, und mit einer teilweise torischen Innenfläche (9), die ebenfalls auf der Mittelebene zentriert ist und mit den radialen Flächen jeweils über eine konische Fläche (10, 11) verbunden ist, die eine Fase bildet.

2. Dichtungselement nach Anspruch 1, dadurch **gekennzeichnet,** daß der Radius des torischen Wulstes (7) kleiner ist als der der torischen Innenfläche (9).

3. Dichtungsvorrichtung für ein Rohr (3), das in der Bohrung (B) eines Körpers (C), insbesondere eines Schnellkupplungs-Anschlußstückes, aufgenommen ist, wobei die Bohrung (B) eine zylindrische Aufnahme (1a) und eine Schulter (1b) hat, und wobei die Vorrichtung ein Dichtungselement nach Anspruch 1 oder Anspruch 2 enthält, das sich zwischen dem Rohr (3) und der zylindrischen Aufnahme (1a) der Bohrung (B) erstreckt.

4. Vorrichtung nach Anspruch 3, dadurch **gekennzeichnet,** daß die Schulter (1b) der Bohrung eine konische Fläche bildet, deren Spitze in Richtung der Einführung des Rohres in die Bohrung (B) weist.

5. Vorrichtung nach Anspruch 4, dadurch **gekennzeichnet,** daß der Winkel am Scheitelpunkt der konischen Fläche (1b) ungefähr 160° beträgt.

## Claims

1. A sealing gasket constituted by a circularly symmetrical annular body defined by two parallel radial faces (4, 5), an outer cylindrical surface (6) surmounted by a partially toroidal bulge (7) centered on the midplane of the gasket parallel to said radial faces (4, 5), a partially toroidal inner surface (9), also centered on the midplane, and connected to each of the radial faces via a respective chamfer-forming conical surface (10, 11).

2. A gasket according to claim 1, characterized in that the radius of the toroidal bulge (7) is smaller than the radius of the inner toroidal surface (9).

3. A sealing device for a tube (3) housed in the bore (B) of a body (C), in particular a quick-connection coupling, said bore (B) including a cylindrical bearing surface (1a) and a shoulder (1b), and the device comprising a gasket according to claim 1 or 2 extending between the tube (3) and the cylindrical bearing surface (1a) of the bore (B).

4. A device according to claim 3, characterized in that the shoulder (1b) of the bore forms a conical surface whose apex points in the same direction as the direction in which the tube is inserted in the bore (B).

5. A device according to claim 4, characterized in that the apex angle of the conical surface (1b) is of the order of 160°.
